# EUROPEAN PATENT SPECIFICATION

(11) **EP 3 633 272 B1**
(45) Date of publication and mention of the grant of the patent: **24.03.2021**
(21) Application number: 19200819.1
(22) Date of filing: 01.10.2019
(51) Int. Cl.: F24D 10/00, F01K 9/00, F23J 15/06, F24D 15/04, F24H 8/00, F01K 17/06, F23J 15/04

(54) **METHOD FOR RECOVERING HEAT FROM FLUE GAS OF BOILER, AND ARRANGEMENT**
VERFAHREN ZUR WÄRMERÜCKGEWINNUNG AUS RAUCHGAS EINES KESSELS UND ANORDNUNG
PROCÉDÉ DE RÉCUPÉRATION DE CHALEUR À PARTIR DE GAZ COMBUSTIBLES DE CHAUDIÈRE ET AGENCEMENT

(30) Priority: 04.10.2018 FI 20185835
(43) Date of publication of application: 08.04.2020
(73) Proprietor: Valmet Technologies Oy, 02150 Espoo (FI)
(72) Inventor: Ståhls, Jonas, 33270 Tampere (FI); Arola, Joonas, 37560 Lempäälä (FI); Kuvaja, Lari-Matti, 33480 Ylöjärvi (FI)
(74) Representative: Papula Oy

(56) References cited:
- EP-A2- 2 644 993
- CN-A- 105 605 647
- CN-B- 106 482 141
- DE-A1-102010 005 259

## Description

### BACKGROUND

The invention relates to a method for recovering heat from flue gas of a boiler.

The invention further relates to an arrangement for recovering heat from flue gas of a boiler.

It is known to use flue gas washing and condensing systems, such as condensers and scrubbers, in combustion plants for recovering heat from flue gas which is produced in the combustion of a fuel. In a flue gas scrubber, the flue gas is cooled by scrubbing water so that water vapour contained in the flue gas condenses and the released condensing heat may be utilized, for instance, in a district heating plant where the condensing heat is used to heat district heating water. The scrubbing water is circulated through a heat exchanger where heat energy is transferred into district heating water.

It is also known to connect a heat pump between a supply channel feeding heated water in a district heating network and a return channel supplying district heating water returning from the district heating network back into the heat exchanger for heating. The heat pump is configured to heat the district heating water in the supply channel by using heat energy of water running in the return channel. An advantage is that cooler water is supplied in the heat exchanger and thus flue gases can be condensed to a lower temperature.

CN 106482141, FI 122857, WO 2007036236, and US 4799941 disclose methods and arrangements for recovering heat from flue gas of a boiler . EP 2 644 993 A2 discloses a method and an apparatus according to the preamble of independent claims 1 and 10.

A problem arises if there the flue gas scrubber is followed by a combustion air humidifier. Due to low temperature of flue gases, less humidity and heat can be transferred in combustion air, and the overall humidification degree is decreased.

### BRIEF DESCRIPTION

It is the main objective of the present invention to reduce or even eliminate prior art problems presented above.

Viewed from a first aspect, there can be provided a method for recovering heat from flue gas of a boiler, the method comprising passing the flue gas through a flue gas cooling unit, cooling the flue gas in the flue gas cooling unit, said cooling comprising cooling by a circulation of a cooling liquid, feeding at least part of said cooling liquid heated in the flue gas cooling unit into a heat pump, the heat pump being coupled to a circulation of heat-transfer fluid, transferring condensing heat of said heat-transfer fluid into said cooling liquid fed in the heat pump for raising the temperature of said cooling liquid, feeding said cooling liquid heated in the heat pump in a combustion air humidifier, and humidifying combustion air to be fed in the boiler in the combustion air humidifier.

Thereby more humidity and heat can be transferred in combustion air, especially when fuel used in the plant is dry, may be achieved.

Viewed from a further aspect, there can be provided an arrangement for recovering heat from flue gas of a boiler, the arrangement comprising a flue gas cooling unit, configured to cool the flue gas with a cooling liquid, a heat pump, coupled to the flue gas cooling unit and arranged to receive cooling liquid heated in said flue gas cooling unit and further receiving heat-transfer fluid, the heat pump configured for further heating of said cooling liquid by heat energy of said heat-transfer fluid, and a combustion air humidifier coupled to the heat pump and configured to receive cooling liquid heated further in the heat pump.

Thereby an arrangement having ability to transfer more humidity and heat in combustion air, especially when fuel used in the plant is dry, may be achieved.

The arrangement and the method are characterised by what is stated in the characterising parts of the independent claims. Some other embodiments are characterised by what is stated in the other claims. Inventive embodiments are also disclosed in the specification and drawings of this patent application. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment, a first cooling liquid is passed through a third heat exchange zone and also through a second heat exchange zone of the flue gas scrubber.

An advantage is that, at least, the humidification degree may be raised.

In one embodiment, the flue gas cooling unit comprises a flue gas scrubber.

An advantage is that a high capacity of cooling may be achieved with an inexpensive way.

In one embodiment, the flue gas cooling unit comprises a tube heat exchanger.

An advantage is that the flue gas cooling unit has a low electricity consumption and a compact size that facilities designing the layout of the cooling unit.

In one embodiment, the arrangement comprises a circulation arrangement of district heating water, and the circulation arrangement is connected to the heat pump and adapted to feed returning district heating water as said heat-transfer fluid in the heat pump.

An advantage is that temperature of returning district heating water is lowered, and thus the thermal exchange in the heat exchanger may be intensified.

In one embodiment, a return channel from the combustion air humidifier to the flue gas cooling unit is connected to the heat pump, and cooling liquid returning from the combustion air humidifier is said heat-transfer fluid.

An advantage is that the dew point raises in the flue gas cooling unit and thus heat energy recovery may be higher.

In one embodiment, the arrangement comprises multiple heat pumps arranged in series in the circulation of the cooling liquid.

An advantage is that temperature of liquid passed in the combustion air humidifier may be even more raised.

### BRIEF DESCRIPTION OF FIGURES

Some embodiments illustrating the present disclosure are described in more detail in the attached drawings, in which
Figure 1 is a schematic side view of an arrangement and method for recovering heat from flue gas of a boiler,
Figure 2 is a schematic side view of another arrangement and method for recovering heat from flue gas of a boiler,
Figure 3 is a schematic side view of a third arrangement and method for recovering heat from flue gas of a boiler,
Figure 4 is a schematic side view of a fourth arrangement and method for recovering heat from flue gas of a boiler, and
Figure 5 is a schematic side view of another type of flue gas cooling unit suitable for arrangement and method for recovering heat from flue gas of a boiler.

In the figures, some embodiments are shown simplified for the sake of clarity. Similar parts are marked with the same reference numbers in the figures.

### DETAILED DESCRIPTION

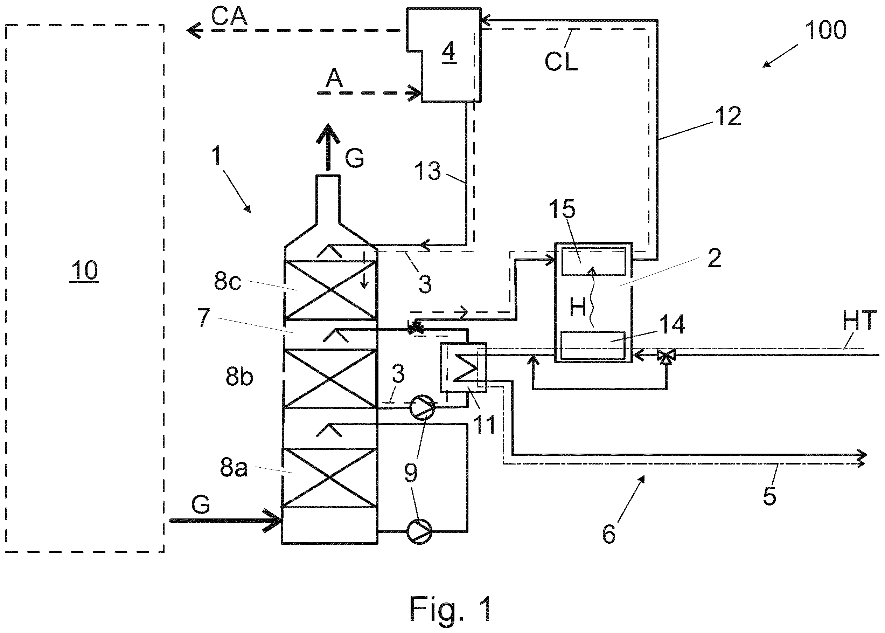

Figure 1 is a schematic side view of an arrangement and method for recovering heat from flue gas of a boiler.

In the embodiment shown in Figure 1, the boiler 10 is a heating boiler that burns in a combustion process fuel, such as biomass or fossil fuel. The heat energy that is released in the combustion of the fuel is used to heat water that flows in a district heating network through a circulation arrangement of district heating water 6.

However, it is to be noted, that the arrangement and the method may be applied in various types of combustion plants. The boiler may be, for instance, any type of chemical recovery boiler, fluidized bed boiler, pulverized coal fired boiler, gas fired boiler, pulverized pellet fired boiler, etc. The arrangement and the method may also be applied in combustion engines.

The arrangement 100 comprises a flue gas cooling unit 1 that is configured to cool the flue gas G with a cooling liquid CL. The circulation of the cooling liquid is shown by arrow 3.

In the embodiment shown in Figure 1, the flue gas cooling unit 1 comprises a flue gas scrubber 7 wherein the cooling liquid CL comprises scrubbing water.

It is to be noted here, that in some embodiments the flue gas cooling unit 1 comprises a tube heat exchanger, wherein the cooling takes place by a circulation liquid.

In the flue gas scrubber 7, the flue gas is passed through one or more heat exchange zone(s) or packing zone(s). The flue gas scrubber 7 shown in Figure 1 comprises three packing zones 8a, 8b 8c. The packing zone comprises a random packing bed acting as a heat and mass transfer surface.

The flue gas G is cooled by spraying scrubbing water over the packing zone 8a, 8b 8c, and heat energy is released from the flue gas and recovered into the scrubbing water.

The scrubbing water is circulated by using one or more pump (s) 9 from the flue gas scrubber 7 into a heat exchanger 11, and then back to the flue gas scrubber 7.

In the shown embodiment, there are two scrubbing water circuits in the scrubber 7. First circuit is connected to the first packing zone 8a only, whereas in second circuit the scrubbing water passes through third 8c and second 8b packing zones. However, in some embodiments the circuits of scrubbing water may be arranged differently, e.g. there may be less or more than two scrubbing water circuits.

The amount of heat energy that is released in the scrubbing process depends on the temperature of the scrubbing water, the dew point of the flue gas, as well as flue gas temperature and composition, available cooling liquid flow and temperature, such as temperature of district heating return water, connections and design of the complete system, and components and concepts thereof. The dew point depends on the moisture content of the flue gas. If the flue gas can be cooled under its dew point, the water vapor contained in the flue gas condenses and a large amount of heat energy is released and recovered into the scrubbing water.

In the arrangement 100 there is a combustion air humidifier 4. The combustion air humidifier 4 improves the heat recovery capacity by increasing the moisture content of the combustion air fed in the boiler 10 and thereby increasing the moisture content of the flue gas G.

The combustion air humidifier 4 is connected to the flue gas scrubber 7 by feed channel 12 for receiving water therefrom and by a return channel 13 leading the return water from the combustion air humidifier 4 back in the flue gas scrubber 7.

The arrangement 100 further comprises a heat pump 2 that is coupled to the flue gas scrubber 7, between the scrubber 7 and the combustion air humidifier 4. The heat pump 2 is configured for receiving cooling liquid CL, i.e. scrubbing water, heated in said flue gas scrubber 7 and for further heating said scrubbing water. In the embodiment shown in Figure 1, some of the scrubbing water is returned from the heat exchanger 11 directly back in the second 8b packing zone 8b without circulating it via the heat pump 2 and the combustion air humidifier 4. In another embodiment, all the scrubbing water is passed in the heat pump 2 and the combustion air humidifier 4.

The heat pump 2 is also connected to receive heat-transfer fluid HT. In the shown embodiment, the heat pump 2 is connected to a circulation arrangement 6 of district heating water system, the heat-transfer fluid HT being thus heating water of the district heating water system. The circulation arrangement 6 feeds heating water returning from a district heating network (not shown) used for heating e.g. residential and commercial objects in the heat pump 2.

It is to be noted, that the heat-transfer fluid HT may also comprise natural water, coming from e.g. a sea, a lake or a river, or city water, mill water, tap water etc.

The heat pump 2 comprises an evaporator 14 and a condenser 15. Furthermore, the heat pump 2 includes cooling media, such as ammonia (NH3, R717) that is used for transferring heat energy H from the heat-transfer fluid HT, i.e. heating water to the cooling liquid CL, i.e. scrubbing water.

In the evaporator 14, the cooling media is receiving heat energy from the heating water and allowed to evaporate into a gas. The gas is then compressed to a higher pressure level and at the same time its temperature is increased. In the condenser 15 the gas is allowed to condense and heat energy thus released is transferred into the scrubbing water. As a result, the heat-transfer fluid HT cools down and the cooling liquid CL heats up in the heat pump 2.

The heated cooling liquid CL is passed from the heat pump 2 through a feed channel 12 in the combustion air humidifier 4. Thanks to the heat pump 2, the capacity of the combustion air humidifier 4 to transfer humidity and heat in the combustion air CA fed in the boiler 10 is essentially raised. This means a higher humidity content in the combustion air CA. Following this, the flue gas G contains more water vapour, which leads to a higher dew point of the flue gas G. This promotes condensation of the water vapour and amount of heat energy released and recovered in the scrubbing water. Furthermore, temperature of the heat-transfer fluid HT fed in the heat exchanger 11 is lowered, and thus the cooling capacity of the heat exchanger 11 is raised. Therefore, it is possible to deliver more heat energy from the cooling liquid CL into the heat-transfer fluid HT.

A further advantage of the arrangement 100 and method described in this description is that emissions of the plant or engine may be lowered thanks to higher humidity content in the combustion air CA.

### Example 1

A calculated example with an exemplary arrangement according to Figure 1:
- temperature of heat-transfer fluid HT fed in the arrangement: 60°C
- temperature of heat-transfer fluid HT fed out the arrangement: 63.4°C
- temperature of flue gas leaving the scrubber: 45.1°C
- moisture content of flue gas prior to entering the arrangement: 26 vol-%
- temperature of the cooling liquid CL fed in the heat exchanger: 64.8°C
- humidification of combustion air in the the combustion air humidifier 4: 143 g/kg (dry air)
- electricity consumed in the heat pump: 402 kW
- energy gained: 7.1 MW

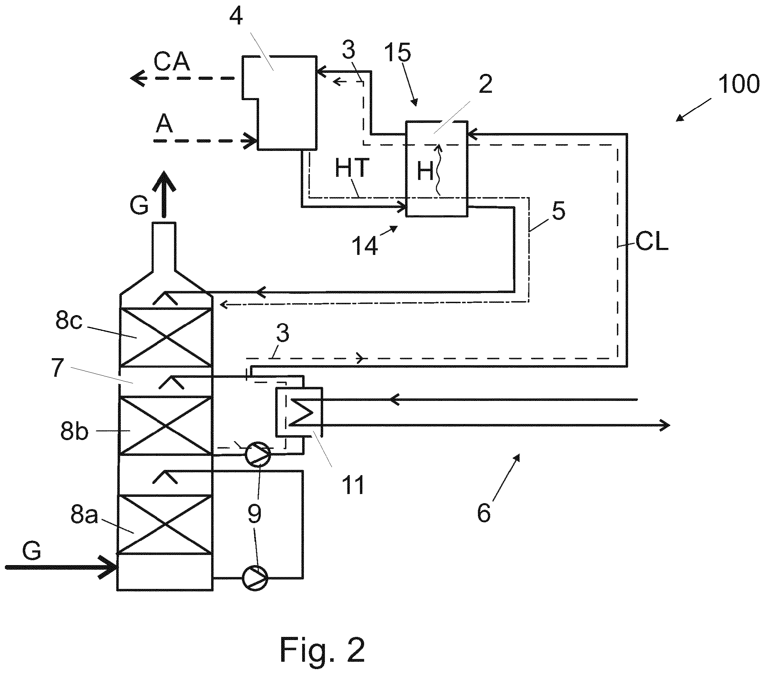

**Figure 2** is a schematic side view of another arrangement and method for recovering heat from flue gas of a boiler.

According to an aspect, the heat-transfer fluid HT used for heating the cooling liquid CL fed in the combustion air humidifier 4 may comprise cooling liquid returning from the combustion air humidifier 4.

In the embodiment shown in Figure 2, the arrangement comprises a flue gas scrubber 7 having three packing zones 8a-8c. Cooling liquid CL circulating in the second 8b and the third 8c packing zones is circulating also through a combustion air humidifier 4.

A heat pump 2 is connected between the flue gas scrubber 7 and the combustion air humidifier 4 such that the cooling liquid CL returning from the combustion air humidifier 4 is fed in an evaporator 14 of the heat pump 2, and the Cooling liquid CL passing in the combustion air humidifier 4 is fed in a condenser 15 of the very same heat pump 2.

The heat pump 2 raises humidity and heat in the combustion air CA fed in the boiler 10 (not shown), and advantages already discussed may be achieved. A further advantage may be that a smaller heat pump and lighter piping may be used, because pressures of the circulation of cooling liquid 3 are typically lower than pressures in circulation arrangement of district heating water. Further advantage is that there is no need to interfere with the circulation arrangement of district heating water, which in some cases may simplify construction of the arrangement. Still further advantage is that temperature variations in the circulation of cooling liquid 3 may be significantly smaller than in the circulation of district heating water, thus controlling of the arrangement may be easier when the heat pump is arranged in the circulation of cooling liquid.

The arrangement 100 shown in Figure 2 comprises also a heat exchanger 11 in the circulation 3 of cooling liquid of the flue gas scrubber 7. The heat exchanger 11 may be connected to a circulation arrangement of district heating water 6, or to another circulation arrangement.

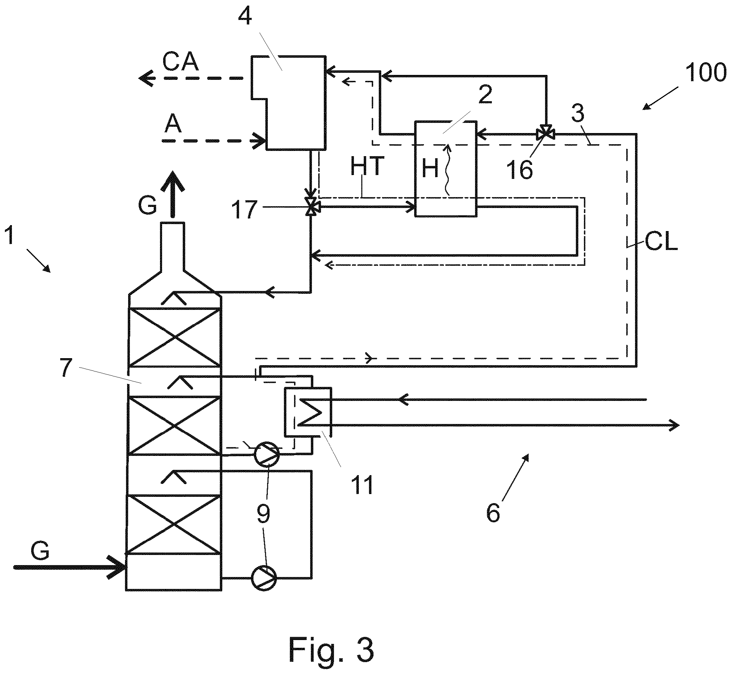

**Figure 3** is a schematic side view of a third arrangement and method for recovering heat from flue gas of a boiler.

The embodiment shown in Figure 3 is similar to that one shown in Figure 2, except that the cooling liquid that is fed in the combustion air humidifier 4 is divided in two portions in a valve 16, a first of which portions is passed in the heat pump 2 for receiving heat energy H, while a second portion is arranged to pass the heat pump 2. Also the cooling liquid returning from the combustion air humidifier 4 is divided into a first and a second portion in a second valve 17. The first portion is passed in the heat pump for acting there as a heat energy source, whereas the second portion is passed back in the flue gas scrubber 7. In an embodiment, the valves 16, 17 are controlled so that the ratios of said first and second portions may be changed on demand.

It is to be noted, that the embodiment where the cooling liquid is divided in two portions prior to and/or after the combustion air humidifier may also be applied in all embodiments of the arrangement and method within the scope of the inventive concept defined by the claims below, for instance in the embodiments shown in Figures 1, 4 and 5.

### Example 2

A calculated example with an exemplary arrangement according to Figure 3:
- temperature of heat-transfer fluid HT fed in the arrangement: 60°C
- temperature of heat-transfer fluid HT fed out the arrangement: 63.8°C
- temperature of flue gas leaving the scrubber: 42.8°C
- moisture content of flue gas prior to entering the arrangement: 26.3 vol-%
- temperature of the cooling liquid CL fed in the heat exchanger: 65°C
- humidification of combustion air in the the combustion air humidifier 4: 146 g/kg (dry air)
- electricity consumed in the heat pump: 402 kW
- energy gained: 7.9 MW

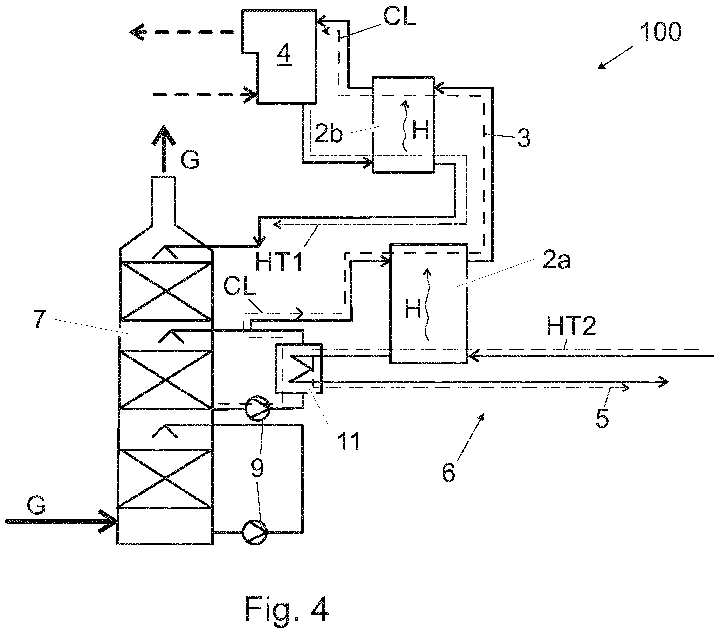

**Figure 4** is a schematic side view of a fourth arrangement and method for recovering heat from flue gas of a boiler.

According to an aspect, cooling liquid CL fed from a flue gas cooling unit in the combustion air humidifier is circulated through at least two heat pumps.

In the embodiment shown in Figure 4, there are two heat pumps 2a, 2b that are arranged in series in the circulation of the cooling liquid CL.

The first heat pump 2a is connected to a circulation arrangement of district heating water 6 for receiving heating water coming from a district heating network (not shown) for being heated in a heat exchanger 11. This connection may be basically similar to that one shown in Figure 1.

The second heat pump 2b is arranged to receive the cooling liquid CL heated in the first heat pump 2a and is configured to further heat the cooling liquid CL prior to its feeding in a combustion air humidifier 4. Thus the the cooling liquid CL is heated in two heating steps.

### Example 3

A calculated example with an exemplary arrangement according to Figure 4:
- temperature of heat-transfer fluid HT fed in the arrangement: 60°C
- temperature of heat-transfer fluid HT fed out the arrangement: 64.1°C
- temperature of flue gas leaving the scrubber: 42.2°C
- moisture content of flue gas prior to entering the arrangement: 26.1 vol-%
- temperature of the cooling liquid CL fed in the heat exchanger: 64.4°C
- humidification of combustion air in the the combustion air humidifier 4: 142 g/kg (dry air)
- electricity consumed in the heat pumps: 804 kW
- energy gained: 8.6 MW

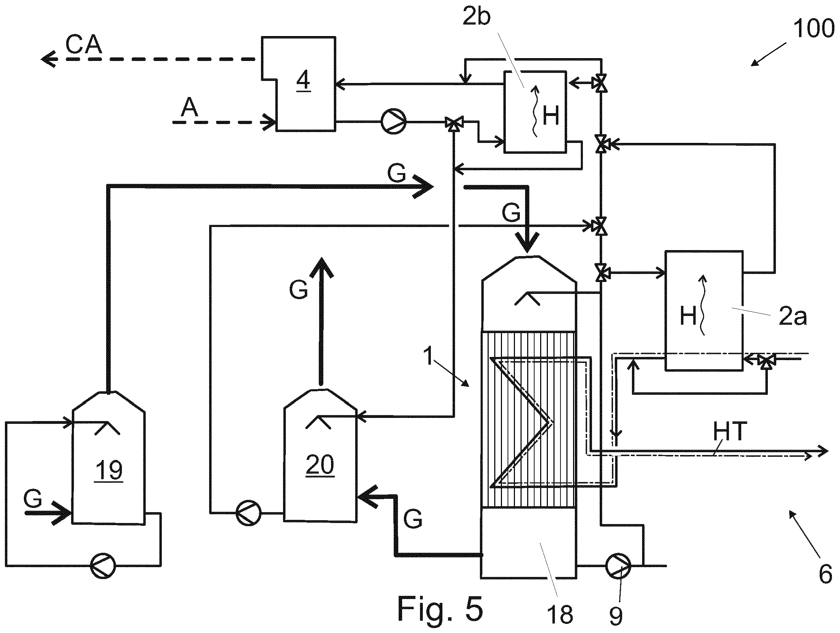

Figure 5 is a schematic side view of another type of flue gas cooling unit suitable for arrangement and method for recovering heat from flue gas of a boiler.

According to an aspect, the flue gas cooling unit comprises a tube heat exchanger 18. In an embodiment, the heat-transfer fluid HT, such as district heating water, is passed in tubes arranged in the tube heat exchanger 18. Flue gas G is arranged to flow outside the tubes. Heat energy is transferred from flue gas G to the heat-transfer fluid HT through the tube walls.

In the embodiment shown in Figure 5, there are first and second heat pumps 2a, 2b, the embodiment thus resembling the embodiment shown in Figure 4. It is to be noted, however, that the tube heat exchanger 18 may also adapted to arrangements the principles of which described in connection with Figures 1-3.

Furthermore, the embodiment comprises a scrubber 19 that receives flue gas G from a boiler (not shown). Scrubbed flue gas is then passed in the tube heat exchanger 18, and from there in a condenser 20. In the condenser 20, flue gas G is cooled by heat transfer fluid (condensate) received from the combustion air humidifier 4 or from the second heat pump 2b. Flue gas G passed the condenser 20 exists the arrangement in a stack (not shown), for instance.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: flue gas cooling unit
- 2, 2a, 2b: heat pump
- 3: circulation of cooling liquid
- 4: combustion air humidifier
- 5: circulation of heat-transfer fluid
- 6: circulation arrangement
- 7: flue gas scrubber
- 8a, 8b, 8c: packing zone
- 9: pump
- 10: boiler
- 11: heat exchanger
- 12: feed channel
- 13: return channel
- 14: evaporator
- 15: condenser
- 16: valve
- 17: second valve
- 18: tube heat exchanger
- 19: scrubber
- 20: condenser
- 100: arrangement
- A: air
- CA: combustion air
- CL: cooling liquid
- HT, HT1, HT2: heat-transfer fluid
- G: flue gas
- H: Heat energy

## Claims

1. A method for recovering heat from flue gas of a boiler (10), the method comprising
- passing the flue gas (G) through a flue gas cooling unit (1),
- cooling the flue gas (G) in the flue gas cooling unit (1), said cooling comprising cooling by a circulation (3) of a cooling liquid (CL),
- feeding at least part of said cooling liquid (CL) heated in the flue gas cooling unit (1) into a heat pump (2, 2a, 2b),
- the heat pump (2, 2a, 2b) being coupled to a circulation (5) of heat-transfer fluid (HT, HT1, HT2), **characterized by**
- transferring condensing heat (H) of said heat-transfer fluid (HT, HT1, HT2) into said cooling liquid (CL) fed in the heat pump (2, 2a, 2b) for raising the temperature of said cooling liquid (CL),
- feeding said cooling liquid (CL) heated in the heat pump (2, 2a, 2b) in a combustion air humidifier (4), and
- humidifying combustion air to be fed in the boiler (10) in the combustion air humidifier (4).

2. The method as claimed in claim 1, cooling the flue gas (G) in a flue gas scrubber (7) by scrubbing water.

3. The method as claimed in claim 2, passing said first cooling liquid through a third heat exchange zone of the flue gas scrubber.

4. The method as claimed in claim 3, passing said first cooling liquid also through a second heat exchange zone of the flue gas scrubber.

5. The method as claimed in claim 1, cooling the flue gas (G) in a tube heat exchanger (18) by a circulation liquid.

6. The method as claimed in any of the preceding claims, wherein the second heat-transfer fluid (HT, HT1, HT2) comprises a circulation of district heating water.

7. The method as claimed in any one of claims 1 - 5, wherein the heat-transfer fluid (HT, HT1, HT2) comprises first cooling liquid returning from the combustion air humidifier (4).

8. The method as claimed in claim 7, comprising dividing the first cooling liquid returning from the combustion air humidifier (4) into a first and second portion, and feeding only the first portion in the heat pump (2, 2a, 2b) .

9. The method as claimed in any of the preceding claims, comprising passing said cooling liquid (CL) through two heat pumps (2a, 2b) prior to feeding in the combustion air humidifier (4).

10. An arrangement for recovering heat from flue gas of a boiler (10), the arrangement (100) comprising
- a flue gas cooling unit (1), configured to cool the flue gas (G) with a cooling liquid (CL),
- a heat pump (2, 2a, 2b), coupled to the flue gas cooling unit (1) and arranged to receive
-- cooling liquid (CL) heated in said flue gas cooling unit (1) and
-- further receiving heat-transfer fluid (HT, HT1, HT2)
**characterized in**
- the heat pump (2, 2a, 2b) configured for further heating of said cooling liquid (CL) by heat energy of said heat-transfer fluid (HT, HT1, HT2), and
- a combustion air humidifier (4) coupled to the heat pump (2, 2a, 2b) and configured to receive cooling liquid (CL) heated further in the heat pump (2, 2a, 2b).

11. The arrangement as claimed in claim 10, wherein the flue gas cooling unit (1) comprises a flue gas scrubber (7) and wherein
the cooling liquid (CL) comprises scrubbing water.

12. The arrangement as claimed in claim 11, wherein the flue gas scrubber (7) comprises three heat exchange zones, and wherein
the cooling liquid (CL) is arranged to pass through a third and a second heat exchange zones of the flue gas scrubber.

13. The arrangement as claimed in claim 10, wherein the flue gas cooling unit (1) comprises a tube heat exchanger (18) .

14. The arrangement as claimed in any one of claims 10 - 13, comprising a circulation arrangement of district heating water (6), and
- the circulation arrangement (6) being connected to the heat pump (2, 2a, 2b) and adapted to feed returning district heating water as said heat-transfer fluid (HT, HT1, HT2) in the heat pump (2, 2a, 2b).

15. The arrangement as claimed in any one of claims 10 - 13, wherein a return channel (13) from the combustion air humidifier (4) to the flue gas cooling unit (1) is connected to the heat pump (2, 2a, 2b), and wherein cooling liquid (CL) returning from the combustion air humidifier (4) is said heat-transfer fluid (HT, HT1, HT2).

16. The arrangement as claimed in any one of claims 10 - 15, comprising multiple heat pumps (2, 2a, 2b) arranged in series in the circulation of the cooling liquid (CL).

## Patentansprüche

1. Verfahren zur Rückgewinnung von Wärme aus Rauchgas von einem Kessel (10), wobei das Verfahren folgende Schritte aufweist:
- Hindurchleiten des Rauchgases (G) durch eine Rauchgas-Kühleinheit (1),
- Abkühlen des Rauchgases (G) in der Rauchgas-Kühleinheit (1), wobei das Abkühlen das Kühlen durch einen Kreislauf (3) einer Kühlflüssigkeit (CL) beinhaltet,
- Einspeisen mindestens eines Teils der in der Rauchgas-Kühleinheit (1) erwärmten Kühlflüssigkeit (CL) in eine Wärmepumpe (2, 2a, 2b),
- wobei die Wärmepumpe (2, 2a, 2b) mit einem Kreislauf (5) von Wärmeübertragungsfluid (HT, HT1, HT2) gekoppelt ist,
**gekennzeichnet durch**
- Übertragen von Kondensationswärme (H) des Wärmeübertragungsfluids (HT, HT1, HT2) in die in die Wärmepumpe (2, 2a, 2b) eingespeiste Kühlflüssigkeit (CL), um die Temperatur der Kühlflüssigkeit (CL) zu erhöhen,
- Einspeisen der in der Wärmepumpe (2, 2a, 2b) erwärmten Kühlflüssigkeit (CL) in einen Verbrennungsluftbefeuchter (4), und
- Befeuchten der Verbrennungsluft, die dem Kessel (10) zugeführt werden soll, in dem Verbrennungsluftbefeuchter (4).

2. Verfahren nach Anspruch 1,
bei dem das Rauchgas (G) in einem Rauchgaswäscher (7) durch Waschwasser gekühlt wird.

3. Verfahren nach Anspruch 2,
bei dem die erste Kühlflüssigkeit durch eine dritte Wärmeaustauschzone des Rauchgaswäschers geleitet wird.

4. Verfahren nach Anspruch 3,
bei dem die erste Kühlflüssigkeit auch durch eine zweite Wärmeaustauschzone des Rauchgaswäschers geleitet wird.

5. Verfahren nach Anspruch 1,
bei dem das Rauchgas (G) in einem Rohrwärmetauscher (18) durch eine Zirkulationsflüssigkeit gekühlt wird.

6. Verfahren nach einem der vorhergehenden Ansprüche,
wobei das zweite Wärmeübertragungsfluid (HT, HT1, HT2) eine Zirkulation von Fernwärmewasser beinhaltet.

7. Verfahren nach einem der Ansprüche 1 bis 5,
wobei das Wärmeübertragungsfluid (HT, HT1, HT2) eine erste Kühlflüssigkeit beinhaltet, die von dem Verbrennungsluftbefeuchter (4) zurückkehrt.

8. Verfahren nach Anspruch 7,
das das Teilen der ersten Kühlflüssigkeit, die von dem Verbrennungsluftbefeuchter (4) zurückkehrt, in einen ersten und einen zweiten Teil sowie das Einspeisen nur des ersten Teils in die Wärmepumpe (2, 2a, 2b) beinhaltet.

9. Verfahren nach einem der vorhergehenden Ansprüche,
das das Hindurchleiten der Kühlflüssigkeit (CL) durch zwei Wärmepumpen (2a, 2b) vor dem Einspeisen in den Verbrennungsluftbefeuchter (4) beinhaltet.

10. Anordnung zur Rückgewinnung von Wärme aus Rauchgas von einem Kessel (10), wobei die Anordnung (100) aufweist:
- eine Rauchgas-Kühleinheit (1), die zum Kühlen des Rauchgases (G) mit einer Kühlflüssigkeit (CL) ausgebildet ist,
- eine Wärmepumpe (2, 2a, 2b), die mit der Rauchgas-Kühleinheit (1) gekoppelt und dazu ausgebildet ist,
-- in der Rauchgas-Kühleinheit (1) erwärmte Kühlflüssigkeit (CL) zu empfangen und
-- ferner das Wärmeübertragungsfluid (HT, HT1, HT2) zu empfangen, **dadurch gekennzeichnet,**
- **dass** die Wärmepumpe (2, 2a, 2b) zum weiteren Erwärmen der Kühlflüssigkeit (CL) durch Wärmeenergie des Wärmeübertragungsfluids (HT, HT1, HT2) ausgebildet ist, und
- **dass** ein Verbrennungsluftbefeuchter (4) mit der Wärmepumpe (2, 2a, 2b) gekoppelt ist und dazu ausgebildet ist, in der Wärmepumpe (2, 2a, 2b) weiter erwärmte Kühlflüssigkeit (CL) zu empfangen.

11. Anordnung nach Anspruch 10,
wobei die Rauchgas-Kühleinheit (1) einen Rauchgaswäscher (7) aufweist und wobei die Kühlflüssigkeit (CL) Waschwasser aufweist.

12. Anordnung nach Anspruch 11,
wobei der Rauchgaswäscher (7) drei Wärmeaustauschzonen aufweist und wobei die Kühlflüssigkeit (CL) dazu ausgebildet ist, eine dritte und eine zweite Wärmeaustauschzone des Rauchgaswäschers zu durchlaufen.

13. Anordnung nach Anspruch 10,
wobei die Rauchgas-Kühleinheit (1) einen Rohrwärmetauscher (18) aufweist.

14. Anordnung nach einem der Ansprüche 10 bis 13,
die eine Fernwärmewasser-Kreislaufanordnung (6) aufweist, und
- wobei die Kreislaufanordnung (6) mit der Wärmepumpe (2, 2a, 2b) verbunden ist und dazu ausgebildet ist, zurückkehrendes Fernwärmewasser als Wärmeübertragungsfluid (HT, HT1, HT2) in die Wärmepumpe (2, 2a, 2b) einzuspeisen.

15. Anordnung nach einem der Ansprüche 10 bis 13,
wobei ein Rücklaufkanal (13) von dem Verbrennungsluftbefeuchter (4) zu der Rauchgas-Kühleinheit (1) mit der Wärmepumpe (2, 2a, 2b) verbunden ist, und wobei Kühlflüssigkeit (CL), die von dem Verbrennungsluftbefeuchter (4) zurückkehrt, das Wärmeübertragungsfluid (HT, HT1, HT2) ist.

16. Anordnung nach einem der Ansprüche 10 bis 15,
die mehrere Wärmepumpen (2, 2a, 2b) aufweist, die in dem Kreislauf der Kühlflüssigkeit (CL) in Reihe angeordnet sind.

## Revendications

1. Procédé pour récupérer la chaleur de gaz de combustion d'une chaudière (10), le procédé comprenant
- faire passer les gaz de combustion (G) à travers une unité de refroidissement de gaz de combustion (1),
- refroidir les gaz de combustion (G) dans l'unité de refroidissement des gaz de combustion (1), ledit refroidissement comprenant un refroidissement par une circulation (3) d'un liquide de refroidissement (CL),
- amener au moins une partie dudit liquide de refroidissement (CL) chauffé dans l'unité de refroidissement des gaz de combustion (1) dans une pompe à chaleur (2, 2a, 2b),
- la pompe à chaleur (2, 2a, 2b) étant couplée à une circulation (5) de fluide de transfert thermique (HT, HT1, HT2), **caractérisée par**
- transférer la chaleur de condensation (H) dudit fluide de transfert thermique (HT, HT1, HT2) dans ledit liquide de refroidissement (CL) alimenté dans la pompe à chaleur (2, 2a, 2b) pour élever la température dudit liquide de refroidissement (CL),
- alimenter ledit liquide de refroidissement (CL) chauffé dans la pompe à chaleur (2, 2a, 2b) dans un humidificateur d'air de combustion (4), et
- humidifier l'air de combustion à introduire dans la chaudière (10) dans l'humidificateur d'air de combustion (4).

2. Procédé selon la revendication 1, refroidissant les gaz de combustion (G) dans un épurateur de gaz de combustion (7) par eau d'épuration.

3. Procédé selon la revendication 2, faisant passer ledit premier liquide de refroidissement à travers une troisième zone d'échange de chaleur de l'épurateur de gaz de combustion.

4. Procédé selon la revendication 3, faisant passer ledit premier liquide de refroidissement également à travers une deuxième zone d'échange de chaleur de l'épurateur de gaz de combustion.

5. Procédé selon la revendication 1, refroidissant des gaz de combustion (G) dans un tube échangeur de chaleur (18) par un liquide de circulation.

6. Procédé selon l'une quelconque des revendications précédentes, dans lequel le deuxième fluide de transfert thermique (HT, HT1, HT2) comprend une circulation d'eau de chauffage urbain.

7. Procédé selon l'une quelconque des revendications 1 à 5, dans lequel le fluide de transfert thermique (HT, HT1, HT2) comprend un premier liquide de refroidissement revenant de l'humidificateur d'air de combustion (4).

8. Procédé selon la revendication 7, comprenant la division du premier liquide de refroidissement revenant de l'humidificateur d'air de combustion (4) en une première et une deuxième partie, et alimentation uniquement de la première partie dans la pompe à chaleur (2, 2a, 2b).

9. Procédé selon l'une quelconque des revendications précédentes, comprenant le passage dudit liquide de refroidissement (CL) à travers deux pompes à chaleur (2a, 2b) avant alimentation dans l'humidificateur d'air de combustion (4).

10. Agencement pour récupérer la chaleur des gaz de combustion d'une chaudière (10), l'agencement (100) comprenant
- une unité de refroidissement de gaz de combustion (1), configurée pour refroidir le gaz de combustion (G) avec un liquide de refroidissement (CL),
- une pompe à chaleur (2, 2a, 2b), couplée à l'unité de refroidissement de gaz de combustion (1) et agencée pour recevoir
- un liquide de refroidissement (CL) chauffé dans ladite unité de refroidissement de gaz de combustion (1) et
- recevant en outre un fluide de transfert thermique (HT, HT1, HT2), **caractérisé en ce que**
- la pompe à chaleur (2, 2a, 2b) configurée pour un chauffage supplémentaire dudit liquide de refroidissement (CL) par l'énergie thermique dudit fluide de transfert thermique (HT, HT1, HT2), et
- un humidificateur d'air de combustion (4) couplé à la pompe à chaleur (2, 2a, 2b) et configuré pour recevoir du liquide de refroidissement (CL) chauffé davantage dans la pompe à chaleur (2, 2a, 2b).

11. Agencement selon la revendication 10, dans lequel l'unité de refroidissement de gaz de combustion (1) comprend un épurateur de gaz de combustion (7) et dans lequel le liquide de refroidissement (CL) comprend de l'eau d'épuration.

12. Agencement selon la revendication 11, dans lequel l'épurateur de gaz de combustion (7) comprend trois zones d'échange de chaleur, et dans lequel le liquide de refroidissement (CL) est agencé pour passer à travers une troisième et une deuxième zones d'échange de chaleur de l'épurateur de gaz de combustion.

13. Agencement selon la revendication 10, dans lequel l'unité de refroidissement de gaz de combustion (1) comprend un tube échangeur de chaleur (18).

14. Agencement selon l'une quelconque des revendications 10 à 13, comprenant un agencement de circulation d'eau de chauffage urbain (6), et
- le dispositif de circulation (6) étant relié à la pompe à chaleur (2, 2a, 2b) et adapté pour alimenter l'eau de chauffage urbain de retour dudit fluide de transfert thermique (HT, HT1, HT2) dans la pompe à chaleur (2, 2a, 2b).

15. Agencement selon l'une quelconque des revendications 10 à 13, dans lequel un canal de retour (13) de l'humidificateur d'air de combustion (4) à l'unité de refroidissement des gaz de combustion (1) est connecté à la pompe à chaleur (2, 2a, 2b). et dans lequel le liquide de refroidissement (CL) revenant de l'humidificateur d'air de combustion (4) est ledit fluide de transfert thermique (HT, HT1, HT2).

16. Agencement selon l'une quelconque des revendications 10 à 15, comprenant plusieurs pompes à chaleur (2, 2a, 2b) disposées en série dans la circulation du liquide de refroidissement (CL).
